Europäisches Patentamt

European Patent Office

Office européen des brevets

(11) Veröffentlichungsnummer: **0 477 736 A1**

# EUROPÄISCHE PATENTANMELDUNG

(21) Anmeldenummer: **91115782.4**

(22) Anmeldetag: **18.09.91**

(51) Int. Cl.5: **C08F 255/02**, C09D 151/00

(30) Priorität: **27.09.90 DE 4030564**

(43) Veröffentlichungstag der Anmeldung:
**01.04.92 Patentblatt 92/14**

(84) Benannte Vertragsstaaten:
**AT BE DE ES FR GB IT NL SE**

(71) Anmelder: **HOECHST AKTIENGESELLSCHAFT
Postfach 80 03 20
W-6230 Frankfurt am Main 80(DE)**

(72) Erfinder: **Hobes, John Victor, Dr.
Ernastrasse 2b
W-4220 Dinslaken(DE)**

(54) **Pfropfpolymer auf Basis von ultrahochmolekularem Polyethylen.**

(57) Die vorliegende Erfindung betrifft ein auf ultrahochmolekularem Polyethylen mit einer Molmasse $\geq 1\,000\,000$ g mol$^{-1}$ als Basispolymer und einer Alkencarbonsäure oder Alkencarbonsäureanhydrid als Pfropfmonomer aufbauendes Pfropfpolymer mit gegenüber ultrahochmolekularem Polyethylen modifizierten und verbesserten Eigenschaften, seine Herstellung sowie seine Verwendung.

EP 0 477 736 A1

Die vorliegende Erfindung betrifft ein auf ultrahochmolekularem Polyethylen als Basispolymer aufbauendes Pfropfpolymer mit gegenüber ultrahochmolekularem Polyethylen modifizierten und verbesserten Eigenschaften, seine Herstellung sowie seine Verwendung.

Es hat in der Vergangenheit nicht an Versuchen gefehlt, die Eigenschaften unterschiedlicher Polyethylene durch Zugabe von Additiven und/oder mittels chemischer Reaktionen in gewünschter Weise zu beeinflussen.

So beschreibt die EP-A-0 170 790 eine Zusammensetzung, die neben ultrahochmolekularem Polyethylen 0,1 bis 25 Gew.-%, bezogen auf ultrahochmolekulares Polyethylen, einer organischen Carbonsäure mit mindestens 2 Carbonsäuregruppen und 0,01 bis 2,5 Gew.-%, bezogen auf ultrahochmolekulares Polyethylen, einer Lewis-Base enthält. Diese Zusammensetzung wird erhalten, indem man ultrahochmolekulares Polyethylen mit der organischen Carbonsäure und der Lewis-Base, insbesondere Zinkstearat oder Aluminiumstearat, vermischt. Diese Mischung kann anschließend unter hohen Temperaturen beispielsweise mit Hilfe eines Schneckenextruders verarbeitet werden.

Diese Art der Verarbeitung ist möglich, da organische Carbonsäure und Lewis-Base die ultrahochmolekularen Polyethylenpartilel umhüllen und während der Verarbeitung die Wirkung eines Gleitmittels ausüben.

Die US-PS 4,147,740 beschreibt ein Verfahren zur Herstellung modifizierter gepfropfter Polyethylene, wobei Polyethylen mit 0,1 bis 1,5 Gew.-%, bezogen auf Polyethylen, eines ungesättigten Polycarbonsäureanhydrids, insbesondere Maleinsäureanhydrid, vermischt und bei 140 bis 210 °C als Schmelze in Gegenwart eines organischen Peroxids mit einer Halbwertszeit von wenigstens 60 Sekunden umgesetzt wird. Die US-PS 4,147,740 liefert keinen Hinweis, ultrahochmolekulares Polyethylen zur Herstellung modifizierten gepfropften Polyethylens zu verwenden.

Unter ultrahochmolekularem Polyethylen versteht man ein Polyethylen mit sehr hohem Polymerisationsgrad, das unter den Bedingungen der Niederdrucksynthese und unter Verwendung von Ziegler-Katalysatoren hergestellt wird. Seine viskosimetrisch gemessene molare Masse (Molekulargewicht) beträgt wenigstens 1 000 000 g mol$^{-1}$, wobei mit steigender molarer Masse (nachfolgend verkürzt als Molmasse bezeichnet) eine Reihe technisch bedeutsamer Eigenschaften wie Kerbschlagzähigkeit, Formbeständigkeit unter Wärme, Reißfestigkeit bei erhöhten Temperaturen und Verschleißfestigkeit zunehmen. Diese Kombination von Merkmalen eröffnet dem ultrahochmolekularen Polyethylen Einsatzgebiete, die nicht nur bei hohen, sondern auch bei tiefen Temperaturen an den verwendeten Werkstoff große Anforderungen hinsichtlich Beanspruchungsfähigkeit und Belastbarkeit richten. Bei der Beschichtung von Formteilen erweist sich die fehlende Haftfestigkeit von ultrahochmolekularem Polyethylen allerdings als nachteilig.

Um dennoch ultrahochmolekulares Polyethylen als Beschichtungsmaterial verwenden zu können, unterzieht man die Oberfläche des ultrahochmolekularen Polyethylens einer gesonderten Behandlung. Durch Beflämmung, Aufrauhen, Funkentladung, Behandlung mit Lösungsmitteln oder durch Eintauchen in ein Beizbad erhält die Oberfläche des derart behandelten ultrahochmolekularen Polyethylens eine gewisse Haftfähigkeit, die eine Weiterverarbeitung ermöglicht.

Es besteht daher ein Bedarf nach einem Stoff, der einerseits im wesentlichen die Eigenschaften von ultrahochmolekularem Polyethylen, andererseits eine verbesserte Abriebfestigkeit aufweist und sich zugleich durch eine gute Haftfähigkeit auszeichnet, ohne daß - wie zuvor beschrieben - eine separate Nachbehandlung zur Erzeugung dieser Haftfähigkeit erforderlich ist.

Die vorstehend beschriebene Aufgabe wird gelöst durch ein Pfropfpolymer enthaltend 95 bis 99,9 Gew.-Teilen Polyethylen mit einer Molmasse ≥ 1 000 000 g mol$^{-1}$ als Basispolymer und 5 bis 0,1 Gew.-Teilen Alkencarbonsäure oder Alkencarbonsäureanhydrid als Pfropfmonomer.

Das in dem erfindungsgemäßen Pfropfpolymer enthaltene Polyethylen besteht - bedingt durch die Art der Herstellung - aus einem Gemisch unvernetzter und vernetzter Polyethylene, auf die die Alkencarbonsäure oder das Alkencarbonsäureanhydrid aufgepfropft ist. Der Vernetzungsgrad des Polyethylens, d. h. der prozentuale Anteil vernetzten Polyethylens bezogen auf gesamtes Polyethylen, liegt bei 30 bis 98, insbesondere 40 bis 95 %.

Das Pfropfpolymer enthält 96,0 bis 99,5, insbesondere 96,5 bis 99,0 bevorzugt 97,0 bis 99,0 Gew.-Teile Polyethylen mit einer Molmasse ≥ 1 000 000 g mol$^{-1}$ und 4,0 bis 0,5, insbesondere 3,5 bis 1,0, bevorzugt 3,0 bis 1,0 Gew.-Teile Alkencarbonsäure oder Alkencarbonsäureanhydrid.

Das Pfropfpolymer kann noch in untergeordnetem Umfange weitere Zusatzstoffe, beispielsweise Additive, Stabilisatoren oder Gleitmittel enthalten.

Das erfindungsgemäße Pfropfpolymer weist nicht nur im wesentlichen die für ultrahochmolekulares Polyethylen typischen Eigenschaften auf, sondern es besitzt auch eine gegenüber dem Ausgangsmaterial (Basispolymer) deutlich verbesserte Abriebfestigkeit.

Zur Ermittlung der Abriebfestigkeit bedient man sich des sogenannten Sand-Slurry-Testes, d.h. einer Aufschlämmungsmethode, die als Prüfverfahren in J. Berzen, CZ-Chemie-Technik 3(1974) Seiten 129 bis 134 näher beschrieben ist. Die hierbei gewählte Versuchsanordnung besteht aus parallel angeordneten Reihen mehrerer nebeneinander liegender Verschleißbehälter aus Chrom-Nickel-Stahl, die mit einer Aufschlämmung aus 2 Gew.-Teilen Wasser und 3 Gew.-Teilen Quarzsand einer bestimmten Körnung gefüllt sind. In diesen Behältern rotieren quaderförmige Proben (Abmessung: 76,2 mm x 25,4 mm x 6,35 mm). Jede Probe ist an einem Rührschaft befestigt und dreht sich mit einer vorgegebenen Geschwindigkeit von beispielsweise 300, 600 und 1.200 Umdrehungen pro Minute in einem bestimmten Abstand über dem Boden des Verschleißbehälters. Um zu verhindern, daß die Wasser-Sand-Aufschlämmung zusammen mit der Probe rotiert, was zur Folge hätte, daß der Verschleiß erheblich herabgesetzt würde, befinden sich in dem Verschleißbehälter kreuzweise angeordnete Stege, die als Strömungsbrecher dienen und für eine Verwirbelung der Wasser-Sand-Aufschlämmung sorgen.

Infolge der Einwirkung des Sandes erleidet die zu untersuchende Probe einen durch Abrieb hervorgerufenen Verschleiß, der wegen der unterschiedlichen Dichte der zu untersuchenden Materialien als relativer volumetrischer Verschleißwert angegeben wird. Hierbei wird der Verschleißwert eines bestimmten ultrahochmolekularen Polyethylens willkürlich gleich 100 gesetzt und die entsprechende Vergleichswerte werden hierauf bezogen, wobei ein niedrigerer relativer volumetrischer Verschleißwert mit einer erhöhten Abriebfestigkeit gleichzusetzen ist.

Gegenüber dem als Ausgangsmaterial (Basispolymer) verwendeten, nicht vernetzten ultrahochmolekularen Polyethylen, das keinerlei Haftvermögen besitzt, zeichnet sich das erfindungsgemäße Pfropfpolymerisat ferner durch eine gute Haftfestigkeit aus. Die Haftfestigkeit ist eine Folge der durch Pfropfung auf dem ultrahochmolekularen Polyethylen eingefügten Alkencarbonsäure- oder Alkencarbonsäureanhydrid-Gruppen.Mit steigender Zahl dieser reaktiven Gruppen erhöht sich auch die als Schälfestigkeit gemessene Haftfestigkeit. Die Schälfestigkeit erreicht bei Werten von 0,5 bis 5,0 Gew.-Teile Alkencarbonsäure oder Alkencarbonsäureanhydrid jeweils bezogen auf 100 Gew.-Teile (ultrahochmolekulares Polyethylen und Alkencarbonsäure oder Alkencarbonsäureanhydrid) einen maximalen Wert, der beispielsweise 2 bis 3 N beträgt.

Von den verschiedenen Beanspruchungsmöglichkeiten, wie Zug, Schlag oder Schälung einer Klebverbindung, ist primär letztere zur Beurteilung des Klebverhaltens und somit zur Bewertung der Haftfähigkeit heranzuziehen. Die Schälfestigkeit ist definiert als die Kraft, die zum Abschälen eines bestimmten Streifens einer Polyethylen-Umhüllung über einen definierten Schälweg erforderlich ist. Sie gibt die Kraft pro Reißlänge an, die benötigt wird, um den Verbund zu lösen. Man unterscheidet zwischen Anreiß- und Weiterreißkraft. Letztere ist für die Haftfestigkeit eines Systems von vorrangiger Bedeutung. Als zu verklebende Komponente dienen Aluminiumbleche, auf die das ultrahochmolekulare Polyethylen aufgebracht wird.

Die Bestimmung der Schälfestigkeit erfolgt mit einer Zwick-Zerreißmaschine (vertikale Bauart, in deren Spannbacken die um 90° abgewinkelten Flächen (30 x 100 mm$^2$) des Verbundsystems eingespannt werden. Die eigentliche Klebfläche (70 x 100 mm$^2$) steht hierbei senkrecht zu den Spannbacken.

Die Zuggeschwindigkeit beträgt 50 mm/min. Die auftretenden Reiß- bzw. Schälkräfte werden mittels eines Schreibers registriert.

Das Pfropfpolymerisat enthält als Alkencarbonsäure (Pfropfmonomer) Maleinsäure, Fumarsäure, Itaconsäure, Crotonsäure, Acrylsäure oder Methacrylsäure, insbesondere Acrylsäure.

Das Pfropfpolymerisat enthält als Alkencarbonsäureanhydrid (Pfropfmonomer) Maleinsäureanhydrid, Itaconsäureanhydrid, Crotonsäureanhydrid, Acrylsäureanhydrid oder Methacrylsäureanhydrid, insbesondere Maleinsäureanhydrid.

Besonders hervorzuheben sind Pfropfpolymere, die 1 bis 3 Gew.-Teile Maleinsäureanhydrid je 100 Gew.-Teile (ultrahochmolekulares Polyethylen und Maleinsäureanhydrid) enthalten.

Die vorliegende Erfindung betrifft ferner ein Verfahren zur Herstellung des Pfropfpolymers, indem man ultrahochmolekulares Polyethylen mit der Alkencarbonsäure oder mit dem Alkencarbonsäureanhydrid und einem Radikale bildenden Initiator vermischt, daß gebildete Gemisch unter hohem Druck vorpresst und bei einer Temperatur von 200 bis 250°C und einem Druck von 4,0 bis 20,0 MPa sintert und anschließend unter Beibehaltung von Druck abkühlen läßt.

Als ultrahochmolekulares Polyethylen setzt man ein handelsübliches Produkt mit einer Molmasse von 1 000 000 bis 10 000 000, insbesondere 2 000 000 bis 8 500 000, bevorzugt 3 000 000 bis 8 000 000 g mol$^{-1}$ in feinverteilter Form, beispielsweise als Granulat oder Pulver ein. Als Alkensäure dienen Maleinsäure, Fumarsäure, Itaconsäure, Crotonsäure, Acrylsäure oder Methacrylsäure, insbesondere Acrylsäure.

Als Alkencarbonsäureanhydrid finden Maleinsäureanhydrid, Itaconsäureanhydrid, Crotonsäureanhydrid, Acrylsäureanhydrid oder Methacrylsäureanhydrid, insbesondere Maleinsäureanhydrid Verwendung. Als Radikale bildende Initiatoren haben sich organische Peroxide und Hydroperoxide bewährt. Besonders hervorzuheben sind Diacylperoxide, Peroxodicarbonate, Alkylperester, Perketale, Dialkylperoxide, Dialkylhydrop-

3

eroxide, Ketonperoxide, insbesondere 2,5-Dimethyl-2,5-bis-(tert.-butylperoxi)-hexan und 3,3,6,6,9,9-Hexamethyl-1,2,4,5-tetraoxa-cyclononan.

Besonders bewährt hat es sich, das Pfropfmonomer, nämlich Alkencarbonsäure oder Alkencarbonsäureanhydrid, zusammen mit dem Radikale bildenden Initiator, gelöst in einem hierfür geeigneten Lösungmittel, dem ultrahochmolekularen Polyethylen zuzusetzen, anschließend intensiv zu vermischen und das Lösungsmittel nachfolgend durch Verdunsten zu entfernen.

Zur Herstellung der Lösung, die die Alkencarbonsäure oder das Alkencarbonsäureanhydrid und den Radikale bildenden Initiator enthält, sind polare organische Solventien mit einem relativ niedrigen Siedepunkt, beispielsweise aliphatische Ketone mit 3 bis 5 Kohlenstoffatomen, sowie aliphatische Ester, cyclische Ether wie Tetrahydrofuran oder Dioxan geeignet. Besonders bewährt hat es sich Aceton, Methylisobutylketon, Propylencarbonat, Formamid, Acrylsäureester und Essigsäuremethylester, insbesondere Aceton als Solvens zu gebrauchen.

Durch diesen Tränkungsvorgang wird eine weitestgehend gleichmäßige Verteilung sowohl der Alkencarbonsäure oder des Alkencarbonsäureanhydrids als auch des Radikale bildenden Initiators auf dem Basispolymer sichergestellt. Das Gemisch wird zur Formgebung unter einem Druck von 1 bis 50 MPa gesetzt (Vorpressen), anschließend durch Erhitzen auf 200 bis 250, insbesondere 210 bis 240, bevorzugt 215 bis 230°C und bei einem Druck von 4 bis 20, insbesondere 5 bis 15, bevorzugt 6 bis 12 MPa gesintert. Hierbei ist darauf zu achten, daß ausreichend Zeit zur Verfügung steht, damit das Gemisch vollständig durchplastifiziert und ein möglichst homogenes Pfropfpolymerisat entsteht. Der Sintervorgang sollte unter Berücksichtigung der Abmessungen des jeweils herzustellenden Formkörpers 30 bis 180, insbesondere 40 bis 120, bevorzugt 45 bis 90 Minuten betragen.

Während des Sinterns ist strikt darauf zu achten, daß auf das zu plastifizierende Material keinerlei Scherkräfte, die zu einem unkontrollierten Abbau des ultrahochmolekularen Ethylens führen, einwirken. Aus diesem Grunde ist auch eine Verarbeitung gemäß der EP-A-0 170 790 und der US-PS 4 147 740 mittels eines Schneckenextruders, der starke Scherkräfte auf das Material freisetzt, nicht möglich.

Es ist jedoch auch möglich, die Formgebung durch Extrusion vorzunehmen, wobei man sich eines Ramextruders bedient und während des Extrudierens das Auftreten von Scherkräften vermeidet.

Infolge der durch freigesetzte Radikale initiierten Umsetzung wird nicht nur die Alkencarbonsäure oder das Alkencarbonsäureanhydrid auf das ultrahochmolekulare Polyethylen aufgepfropft, sondern es findet auch eine teilweise Vernetzung des ultrahochmolekularen Polyethylens statt. Der Vernetzungsgrad beträgt - wie bereits angegeben - 30 bis 98 %. Dem vernetzten Polyethylen kann mit den üblichen Meßmethoden keine Molmasse mehr zugeordnet werden.

Der Grad der Vernetzung von Polyethylen hängt von der Menge des eingesetzten, Radikale bildenden Initiators ab. Steigende Mengen Initiator bewirken eine Zunahme des Vernetzungsgrades, während eine Verringerung zu einer Herabsetzung des Vernetzungsgrades führt.

Um sicherzustellen, daß die Alkencarbonsäure oder das Alkencarbonsäureanhydrid möglichst vollständig in das Pfropfpolymer eingebaut wird, ist eine bestimmte Menge des Radikale bildenden Initiators erforderlich. Je Mol Alkencarbonsäure oder Alkencarbonsäureanhydrid werden 0,1 bis 2,0, insbesondere 0,3 bis 1,8, bevorzugt 0,5 bis 1,5 Mol Radikale bildender Initiator eingesetzt.

Die nachstehend beschriebenen Beispiele belegen die Erfindung, ohne sie zu begrenzen.

## Experimenteller Teil

### Beispiele 1 bis 4

Als Ausgangsmaterial dient ein ultrahochmolekulares Polyethylen, das durch die folgenden physikalischen Eigenschaften charakterisiert ist:

Die Dichte des homogen verpreßten Materials, gemessen nach DIN 53 479, beträgt 0,93 g/cm$^3$, die Viskositätszahl, gemessen nach DIN 53 728 bei 135°C (Konzentration in Dekahydronaphthalin 0,0003 g/cm$^3$), beträgt 2 300 ml/g, die mittlere molare Masse (rechnerisch nach der Margolies-Gleichung M = 5,37 x 10$^4$ $[\eta]^{1,49}$ ermittelt) liegt bei 4,4 x 10$^6$ g/mol, der Schmelzindex MFI 190/21,6 g/10 min, bestimmt nach DIN 53 735, ist nicht meßbar. Der Verschleiß, ermittelt nach dem Sand-Slurry-Verfahren (24 Stunden bei 1 200 Umdrehungen min$^{-1}$, Quarzsandkörnung 0,2 bis 1,0 mm), beträgt 100.

Im Beispiel 1 werden 99,0 Gew.-Teile des vorstehend charakterisierten Polyethylens mit 1,0 Gew.-Teilen Maleinsäureanhydrid und in Beispiel 2 hingegen 97,0 Gew.-Teile Polyethylen mit 3,0 Gew.-Teilen Maleinsäureanhydrid umgesetzt. Als Radikale bildender Initiator (Peroxid) dient 2,5-Dimethyl-2,5-bis-(tert.-

butylperoxi)-hexan (I). Man versetzt das pulverförmige ultrahochmolekulare Polyethylen mit einer Lösung aus 1,0 Gew.-Teilen Maleinsäureanhydrid, 0,5 Gew.-Teilen des vorstehend genannten Peroxids und 3,0 Gew.-Teilen Aceton (Beispiel 1) oder 3 Gew.-Teilen Maleinsäureanhydrid, 1,5 Gew.-Teilen Peroxid und 9,0 Gew.-Teilen Aceton (Beispiel 2) und vermischt mit Hilfe eines Taumelmischers gründlich. Anschließend verdunstet man das Aceton. Das mit Maleinsäureanhydrid und Peroxid getränkte ultrahochmolekulare Polyethylen wird anschließend unter Formgebung verarbeitet.

In Beispiel 3 werden 99,0 Gew.-Teile des vorstehend charakterisierten Polyethylens mit 1,0 Gew.-Teilen Maleinsäureanhydrid und in Beispiel 4 hingegen 97,0 Gew.-Teile Polyethylen mit 3,0 Gew.-Teilen Maleinsäureanhydrid umgesetzt. Als Radikale bildender Initiator (Peroxid) dient 3,3,6,6,9,9-Hexamethyl-1,2,4,5-tetraoxa-cyclononan (II). Die weitere Verarbeitung erfolgt für Beispiel 3 analog Beispiel 1 und für Beispiel 4 analog Beispiel 2.

Formgebung:

250 g des mit Maleinsäureanhydrid und Radikale bildendem Initiator getränkten Polyethylens werden in eine kreisförmige Preßform (Durchmesser 140 mm) überführt, gleichmäßig verteilt und unter einen Druck von 5 MPa gesetzt. Anschließend wird innerhalb von 15 sek. auf 220°C aufgeheizt, bei 220 °C und einem Druck von 5 MPa über einen Zeitraum von 60 min gesintert und bei einem Druck von 10 MPa binnen 30 min auf Raumtemperatur abgekühlt. Man erhält einen Preßling von 140 mm Durchmesser und 20 mm Höhe.

Die Ergebnisse der Beispiele 1 bis 4 sind in der nachfolgenden Tabelle zusammengestellt. Beispiel A (Vergleich) betrifft das als Ausgangsmaterial verwendete ultrahochmolekulare Polyethylen.

## Tabelle

| Beispiel | MSA Gew.-% | Peroxid Art | Peroxid Gew.-% | Schälfestig-keit an Aluminium (N) | Verschleiß |
|----------|------------|-------------|----------------|-----------------------------------|------------|
| 1 | 1,0 | I | 0,5 | 2,5 | 62 |
| 2 | 3,0 | I | 1,5 | 2,8 | 54 |
| 3 | 1,0 | II | 0,5 | 2,6 | 65 |
| 4 | 3,0 | II | 1,5 | 2,9 | 52 |
| A | - | - | - | 0,0 | 100 |

MSA = Maleinsäureanhydrid

I = 2,5-Dimethyl-2,5-bis-(tert.-butylperoxi)-hexan

II = 3,3,6,6,9,9-Hexamethyl-1,2,4,5-tetraoxa-cyclononan

**Patentansprüche**

1. Pfropfpolymer enthaltend 95 bis 99,9 Gew.-Teile Polyethylen mit einer Molmasse $\geq$ 1 000 000 g mol$^{-1}$ als Basispolymer und 5 bis 0,1 Gew.-Teilen Alkencarbonsäure oder Alkencarbonsäureanhydrid als Pfropfmonomer.

2. Pfropfpolymer nach Anspruch 1, dadurch gekennzeichnet, daß das Polyethylen eine Molmasse von 1 000 000 bis 10 000 000, insbesondere 2 000 000 bis 8 500 000, bevorzugt 3 000 000 bis 8 000 000 g mol$^{-1}$ aufweist.

3. Pfropfpolymer nach einem oder mehreren der Ansprüche 1 bis 2, dadurch gekennzeichnet, daß es 0,5 bis 4, insbesondere 1,0 bis 3,5 Gew.-Teile, bevorzugt 1,0 bis 3,0 Alkencarbonsäure oder Alkencarbonsäureanhydrid enthält.

4. Pfropfpolymer nach einem oder mehreren der Ansprüche 1 bis 3, dadurch gekennzeichnet, daß es als Alkencarbonsäure Maleinsäure, Fumarsäure, Itaconsäure, Crotonsäure, Acrylsäure oder Methacrylsäure, insbesondere Acrylsäure oder als Alkencarbonsäureanhydrid, Maleinsäureanhydrid, Itaconsäureanhydrid, Crotonsäureanhydrid, Acrylsäureanhydrid oder Methacrylsäureanhydrid, insbesondere Maleinsäureanhydrid enthält.

5. Verfahren zur Herstellung des Pfropfpolymers nach einem oder mehreren der Ansprüche 1 bis 4, dadurch gekennzeichnet, daß man das Polyethylen mit einer Molmasse ≥ 1 000 000 g mol$^{-1}$, Alkencarbonsäure oder Alkencarbonsäureanhydrid und Radikale bildenden Initiator vermischt, das Gemisch unter hohem Druck vorpreßt und bei einer Temperatur von 200 bis 250°C und einem Druck von 5,0 bis 10,0 MPa sintert und anschließend unter Beibehalten von Druck abkühlen läßt.

6. Verfahren zur Herstellung des Pfropfpolymers nach einem oder mehreren der Ansprüche 1 bis 5, dadurch gekennzeichnet, daß man Alkencarbonsäure oder Alkencarbonsäureanhydrid zusammen mit dem Radikale bildenden Initiator in einem Lösungsmittel gelöst dem Polyethylen zusetzt, vermischt, das Lösungsmittel entfernt, das Gemisch unter hohem Druck vorpreßt und bei einer Temperatur von 200 bis 250°C, insbesondere 215 bis 230°C und einem Druck von 5,0 bis 10,0 MPa sintert und anschließend unter Beibehalten von Druck abkühlen läßt.

7. Verwendung des Pfropfpolymers nach einem oder mehreren der Ansprüche 1 bis 6 als Beschichtungsmaterial.

**Europäisches Patentamt**

**EUROPÄISCHER RECHERCHENBERICHT**

Nummer der Anmeldung

## EINSCHLÄGIGE DOKUMENTE

EP 91115782.4

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | <u>EP - A - 0 173 572</u><br>(MITSUI PETROCHEMICAL INDUSTRIES LTD)<br>* Ansprüche 1,3,4,11,12; Beispiele *<br>-- | 1,4-6 | C 08 F 255/02<br>C 09 D 151/00 |
| A | <u>EP - A - 0 300 718</u><br>(MITSUI PETROCHEMICAL INDUTRIES LTD)<br>* Ansprüche 1,3,7 *<br>-- | 1,4,5 | |
| A | PATENT ABSTRACTS OF JAPAN, unexamined applications, Field C, Band 11, Nr. 259, 21. August 1987<br>THE PATENT OFFICE JAPANESE GOVERNEMENT<br>Seite 63 C 441<br>* Kokai-Nr. 62-59 637 (MITSUI PETROCHEM. IND. LTD.)<br>-- | 1,4,7 | |
| A | <u>US - A - 4 957 974</u><br>(ILENDA et al.)<br>* Anspruch 1 *<br>---- | 1 | **RECHERCHIERTE SACHGEBIETE (Int. Cl.⁵)**<br><br>C 08 F 255/00<br>C 09 D 151/00<br>C 09 J 151/00 |

Der vorliegende Recherchenbericht wurde für alle Patentansprüche erstellt.

| Recherchenort | Abschlußdatum der Recherche | Prüfer |
|---|---|---|
| WIEN | 11-12-1991 | PUSTERER |